# EUROPÄISCHE PATENTSCHRIFT

(11) **EP 1 338 496 B1**
(45) Veröffentlichungstag und Bekanntmachung des Hinweises auf die Patenterteilung: **26.04.2006**
(21) Anmeldenummer: 03002624.9
(22) Anmeldetag: 10.02.2003
(51) Int. Cl.: B62D 65/00

(54) **Karosserieanbauteil und Verfahren zu seiner Herstellung**
Accessory for a vehicle body and its manufacturing process
Accessoire de carrosserie de véhicule et sa méthode de fabrication

(30) Priorität: 21.02.2002 DE 10207295
(43) Veröffentlichungstag der Anmeldung: 27.08.2003
(73) Patentinhaber: ArvinMeritor GmbH, 63128 Dietzenbach (DE)
(72) Erfinder: Böhm, Horst, 60599 Frankfurt/Main (DE); Grimm, Rainer, 60599 Frankfurt/Main (DE)
(74) Vertreter: Kitzhofer, Thomas

(56) Entgegenhaltungen:
- EP-A- 1 086 882
- DE-A- 3 712 926
- US-A- 3 591 444

## Beschreibung

Die Erfindung betrifft ein Karosserieanbauteil, insbesondere ein Dachmodul, sowie ein Verfahren zu seiner Herstellung.

Karosserieanbauteile sind solche Teile, die an der Fahrzeugkarosserie angebracht werden. Die Erfindung betrifft insbesondere solche Anbauteile, die die Außenhaut des Fahrzeugs im fertig montierten Zustand definieren und von außen sichtbar sind. Solche Karosserieanbauteile sollen ein geringes Gewicht haben, optisch an angrenzende, lackierte Teile angepaßt sein, eine sehr gute Oberflächenqualität (z.B. Class-A Oberfläche) und neben guten Wärmeeigenschaften auch gute Schallisolationseigenschaften haben. Gerade im Bereich von Dachmodulen, wo-runter auch Dachmodule mit Schiebedacheinheit oder Lamellendächer fallen, haben sich zunehmend Kunststoffverbundteile als besonders vorteilhaft erwiesen. Andere Anbauteile, auf die die vorliegende Erfindung anwendbar ist, sind z. B. Türen und Klappen (Motorhaube, Kofferraumdeckel) von Fahrzeugen.

Es ist bereits bekannt, ein Dachmodul als Verbundteil herzustellen, mit einer außenseitigen, gefärbten, vorzugsweise durchgefärbten Kunststoffolie. Innenseitig wird diese Kunststoffolie mit einem faserverstärkten Kunststoff hinterschäumt, insbesondere einem glasfaserverstärkten PU-Material. Die Glasfasern werden beispielsweise im sogenannten Long-Fibre-Injection-Verfahren (LFI-Verfahren) in den Kunststoff eingeschossen und kontaktieren innenseitig die Kunststoffolie.

Aufgabe der Erfindung ist es, ein Karosserieanbauteil zu schaffen, welches bezüglich der Außenhaut optisch hohen Ansprüchen genügt, das aber zudem ein niedriges Gewicht aufweist. Darüber hinaus soll ein Verfahren zu dessen Herstellung angegeben werden.

Das Karosserieanbauteil nach der Erfindung, welches insbesondere ein Dachmodul ist, besitzt im eingebauten Zustand eine von außen sichtbare Außenseite. Das Karosserieanbauteil umfaßt eine außenseitige, dünne, gefärbte Kunststoffolie und eine innenseitige, faserverstärkte Schicht aus Kunststoff. Zwischen der Kunststoffolie und der faserverstärkten Schicht ist eine Schutzschicht vorgesehen, die aus Kunststoff und so ausgebildet ist, daß sie einen unmittelbaren Kontakt der Fasern der faserverstärkten Schicht mit der Trägerschicht sowie ein ohne die Schutzschicht auftretendes Abzeichnen der Fasern auf der Außenseite verhindert.

Beim erfindungsgemäßen Karosserieanbauteil ist die Kunststoffolie so dünn, die Außenseite so glatt, daß sich insbesondere die nicht zur Außenoberfläche parallel angeordneten Fasern der faserverstärkten Schicht von außen abzeichnen würden, wenn sie unmittelbar innenseitig die Kunststoffolie kontaktierten. Dies würde ohne die Schutzschicht dazu führen, daß die Fasern auf der Außenseite kleine Beulen bilden und sich eine unruhige, matte Oberfläche ergäbe. Die Schutzschicht verhindert aber den unmittelbaren Kontakt der Fasern mit der Kunststoffolie, so daß das Karosserieanbauteil bezüglich der Außenhaut sehr hohen optischen Ansprüchen genügt. Dadurch, daß die Kunststoffolie extrem dünn ausgeführt sein kann, wird zudem Gewicht gespart. Bei bisherigen Karosserieanbauteilen ist die Kunststoffolie stets so dick gewählt, daß die Fasern sich außenseitig nicht abzeichnen, obwohl sie innenseitig unmittelbar die Kunststoffolie kontaktieren.

Die Kunststoffolie ist bevorzugt mehrschichtig aufgebaut, insbesondere hat sie eine innenseitige Trägerschicht und mindestens eine außenseitige Deckschicht. Beispielsweise ist die Kunststoffolie eine zweischichtige Koextrusionsfolie, die durch Tiefziehen deutlich stärker umgeformt werden kann als dies mit Blech möglich wäre.

Die faserverstärkte Schicht besteht gemäß der bevorzugten Ausführungsform aus geschäumtem, glasfaserverstärkten Kunststoff, insbesondere PU-Schaum. Das Bestücken mit Fasern erfolgt vorzugsweise im Long-Fibre-Injection-Verfahren.

Die faserverstärkte Schicht sollte durch Hinterschäumen unmittelbar auf die Schutzschicht aufgebracht werden, was eine einfache, kostengünstige Herstellung und eine gute Verbindung zwischen den Schichten ermöglicht.

Die Schutzschicht besteht gemäß der bevorzugten Ausführungsform aus weichem, vorzugsweise eine geringe Dichte aufweisenden Kunststoff, insbesondere aus Schaum wie offenzelligem Schaum, in den die Fasern zur Schaffung einer guten Verbindung zwar eindringen, ihn aber nicht durchdringen können. Die Schutzschicht kann so ausgebildet sein, daß das PU der faserverstärkten Schicht die Schutzschicht durchdringt und innenseitig mit der Kunststoffolie verbunden ist, so daß trotz der Schutzschicht eine unmittelbare Verbindung zwischen dem PU und der Kunststoffolie erreicht wird. Selbst bei offenzelligem Schaum hat sich herausgestellt, daß die Dicke der Schutzschicht die der Kunststoffolie unterschreiten kann, um dennoch die im LFI-Verfahren eingeschossenen Glasfasern an einem unmittelbaren Kontakt mit der Kunstoffolie zu hindern.

Eine andere Möglichkeit der Ausbildung der Schutzschicht besteht darin, ein Material zu verwenden, das ein Durchdringen des PU verhindert, beispielsweise ein weicher, extrem dünner Lack.

Die Kunststoffolie ist außenseitig extrem glatt und hat bevorzugt sogar eine Class-A Oberfläche, was dem Karosserieanbauteil ein hochwertiges Aussehen verleiht. Wollte man im Stand der Technik eine solch glatte Außenoberfläche erzielen, mußte die Dicke der Kunststoffolie relativ groß sein, denn aufgrund der glatten Außenoberfläche konnten sich innenseitig anliegende Fasern außen sehr schnell abzeichnen. Bei der Erfindung läßt sich aufgrund der zwischengeschalteten Schutzschicht eine Class-A Oberfläche mit einer sehr dünnen, durchgefärbten Kunststoffolie kombinieren.

Die Kunststoffolie hat bevorzugt eine Dicke von weniger als 1,3 mm.

Das erfindungsgemäße Verfahren zum Herstellen des Karosserieanbauteils, insbesondere des Dachmoduls, ist durch folgende Schritte gekennzeichnet:
a) auf die Kunststoffolie wird innenseitig die Schutzschicht zur Bildung eines Zwischenproduktes aufgebracht, und
b) das Zwischenprodukt wird innenseitig mit dem Kunststoff zur Bildung der faserverstärkten Schicht hinterschäumt.

Dabei erfolgt die Zufuhr der Glasfasern in den Kunststoff bevorzugt durch das Long-Fibre-Injection-Verfahren.

Die Schutzschicht wird insbesondere durch Koextrudieren oder Kaschieren oder Schäumen auf die Trägerschicht aufgetragen.

Die Kunststoffolie kann bevorzugt vor dem Schritt a) durch Tiefziehen bearbeitet werden, wobei aber auch ein Tiefziehen nach Schritt a) möglich wäre.

Weitere Merkmale und Vorteile ergeben sich aus der nachfolgenden Beschreibung und aus den Zeichnungen, auf die Bezug genommen wird. In den Zeichnungen zeigen:
Figur 1 eine schematische Perspektivansicht eines Fahrzeugdaches mit einem erfindungsgemäßen Karosserieanbauteil,
Figur 2 einen Teilschnitt durch das Karosserieanbauteil längs der Linie II-II in Figur 1, und
Figur 3 eine Querschnittsansicht durch das erfindungsgemäße Karossierieanbauteil in einem Zwischenschritt seiner Herstellung.

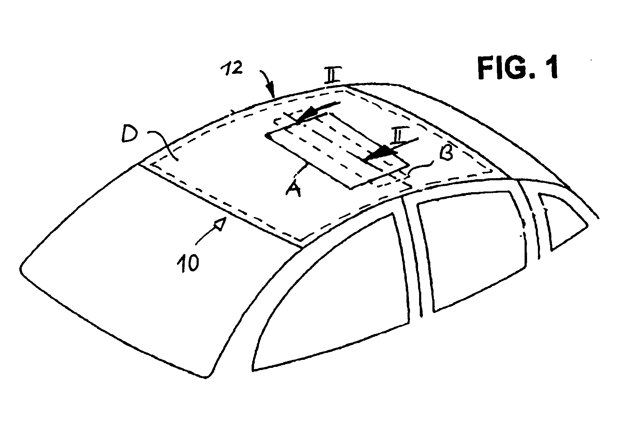

In Figur 1 ist ein Fahrzeugdach 10 dargestellt, dessen Außenhaut wenigstens abschnittsweise durch ein Karosserieanbauteil 12 definiert ist. Das Karosserieanbauteil kann z.B. ein gesamtes Dachmodul D oder der Deckel A oder die Lamelle B zum Schließen einer Dachöffnung sein. Andere Einsatzzwecke für das erfindungsgemäße Karosserieanbauteil sind Türen oder Klappen eines Fahrzeuges oder zumindest Abschnitte von dessen Außenhaut.

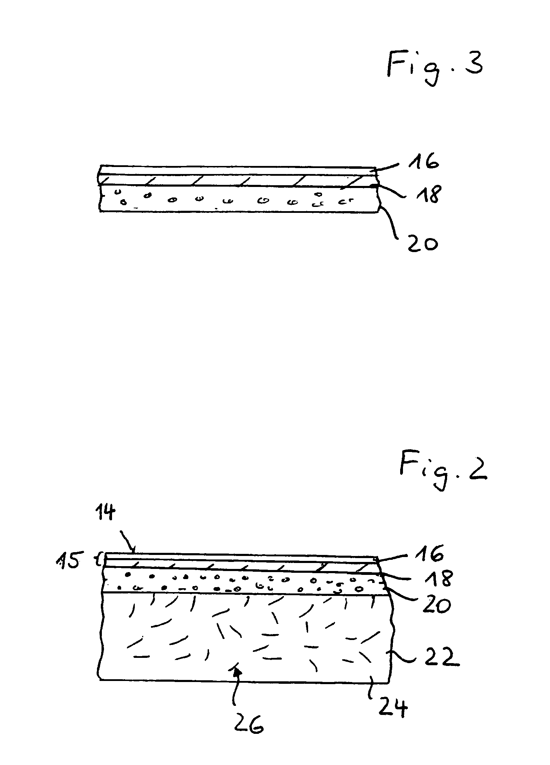

Das Karosserieanbauteil 12, das in Figur 2 im Schnitt dargestellt ist, ist ein Verbundbauteil, das aus mehreren miteinander verbundenen Kunststoffschichten besteht. Die im eingebauten Zustand sichtbare Außenseite ist mit 14 bezeichnet. Das Karosserieanbauteil 12 besteht außenseitig aus einer sehr dünnen (< 1,3 mm) Kunststoffolie 15, insbesondere einer zweischichtigen Koextrusionsfolie. Die äußere Schicht ist eine harte Deckschicht 16, vorzugsweise aus Polymethylmethacrylat (PMMA), welche innenseitig mit einer durchgefärbten Trägerschicht 18, vorzugsweise aus einer Mischung aus Polycarbonat (PC) und Acrylnitril-Styrol-Acrylsäureester-Copolymerisat (ASA), verbunden ist. Die Deckschicht 16 ist kleiner etwa 0,4 mm dick und kann durchsichtig oder ebenfalls durchgefärbt sein.

Die Deck- und/oder die Trägerschicht 16 bzw. 18 sind, wie erläutert, aus durchgefärbtem Kunststoff, so daß eine außenseitige Lackierung entfallen kann und die Außenhaut dennoch einen hochwertigen Eindruck macht. Innenseitig schließt sich an die Trägerschicht 18 unmittelbar eine weiche Schutzschicht 20 aus Schaum oder weichem Kunststoff an. Die Schutzschicht 20 kann vorzugsweise aus offenzelligem Schaum sein. Unmittelbar an die Schutzschicht 20 grenzt eine faserverstärkte dickere Schicht 22 an, die aus einem PU-Schaum 24 sowie durch das LFI-Verfahren in den Schaum 24 eingebrachte Glasfasern 26 besteht. Die Schicht 22 wird durch die Glasfasern 26 faserverstärkt.

Da die Deckschicht 16 und die Trägerschicht 18 sehr dünn sind und die Au-βenseite 14 eine Class-A Oberfläche hat, könnten sich die Glasfasern 26 auf der Außenseite 14 durch kleine Beulen abzeichnen. Um dies zu verhindern, ist die Schutzschicht 20 bezüglich Material als auch Dicke so auf die faserverstärkte Schicht 22 abgestimmt, daß die Glasfasern 26 nicht unmittelbar mit der Trägerschicht 18 in Kontakt kommen.

Andererseits wird die Schutzschicht 20 vom PU-Material der faserverstärkten Schicht 22 durchdrungen, so daß das PU innenseitig mit der Trägerschicht 18 verbunden ist.

Die Herstellung der Karosserieanbauteils wird im folgenden erläutert. Zuerst wird die Kunststoffolie 15 mit der Deckschicht 16 und der Trägerschicht 18 hergestellt, wobei bei der Herstellung der Kunststoff in der Masse mit der gewünschten Farbe durchfärbt wird. Anschließend wird die Kunststoffolie, abhängig natürlich von der späteren Geometrie, in einer entsprechend geformten Tiefziehform bearbeitet. Im nächsten Schritt wird die Schutzschicht 20 zum Beispiel durch Hinterschäumen oder unmittelbares Aufbringen oder durch bloßes Einlegen eines weichen Kunststoffs innenseitig auf die Trägerschicht 18 aufgebracht. Das erzeugte Zwischenprodukt, welches in Figur 3 zu sehen ist, wird schließlich in einer entsprechenden Form hinterschäumt, wobei das Hinterschäumen zur Erzeugung der faserverstärkten Schicht 22 vorgesehen ist und die Glasfasern 26, wie mehrfach erwähnt, im LFI-Verfahren eingeschossen werden.

Alternativ könnte die Schutzschicht 20 vor dem Tiefziehen innenseitig an der Kunststoffolie 15 angebracht (Anlegen oder Kaschieren) werden. Anschließend wird das Zwischenprodukt tiefgezogen und hinterschäumt. Ist die Schutzschicht 20 nur angelegt worden, durchdringt das PU-Material die Schutzschicht 20 und verbindet sich innenseitig mit der Kunststoffolie 15, so daß auch die Schutzschicht 20 fest an der Kunststoffolie 15 angebracht ist.

## Patentansprüche

1. Karosserieanbauteil, insbesondere Dachmodul (D), wobei das Karosserieanbauteil (12) eine im eingebauten Zustand sichtbare Außenseite (14) hat, mit
einer außenseitigen, dünnen, gefärbten Kunststoffolie (15),
einer innenseitigen faserverstärkten Schicht (22) aus Kunststoff sowie
einer Schutzschicht (20) zwischen der Kunststoffolie (15) und der faserverstärkten Schicht (22), die aus Kunststoff und so ausgebildet ist, daß sie einen unmittelbaren Kontakt der Fasern (26) der faserverstärkten Schicht (22) mit der Kunststoffolie (15), sowie ein ohne die Schutzschicht (20) auftretendes Abzeichnen der Fasern (26) auf der Außenseite (14) verhindert.

2. Karosserieanbauteil nach Anspruch 1, **dadurch gekennzeichnet, daß** die Kunststoffolie (15) eine innenseitige Trägerschicht (18) und mindestens eine au-Benseitige Deckschicht (16) aufweist.

3. Karosserieanbauteil nach Anspruch 2, **dadurch gekennzeichnet, daß** die Deckschicht (16) samt Trägerschicht (18) aus einer zweischichtigen Koextrusionsfolie besteht.

4. Karosserieanbauteil nach einem der Ansprüche 1 bis 3, **dadurch gekennzeichnet, daß** die faserverstärkte Schicht (22) aus geschäumtem, glasfaserverstärktem Kunststoff besteht.

5. Karosserieanbauteil nach einem der vorhergehenden Ansprüche, **dadurch gekennzeichnet, daß** die faserverstärkte Schicht (22) PU-Schaum aufweist.

6. Karosseriebauteil nach Anspruch 5, **dadurch gekennzeichnet, daß** das PU der faserverstärkten Schicht (22) die Schutzschicht (20) durchdringt und innenseitig mit der Kunststoffolie (15) verbunden ist.

7. Karosserieanbauteil nach einem der vorhergehenden Ansprüche, **dadurch gekennzeichnet, daß** die faserverstärkte Schicht (22) im Long-Fibre-Injection-Verfahren mit Fasern (26) versehen ist.

8. Karosserieanbauteil nach einem der vorhergehenden Ansprüche, **dadurch gekennzeichnet, daß** die faserverstärkte Schicht (22) durch Hinterschäumen auf die Schutzschicht (20) aufgebracht ist.

9. Karosserieanbauteil nach einem der vorhergehenden Ansprüche, **dadurch gekennzeichnet, daß** die Schutzschicht (20) aus Schaum oder weichem Kunststoff besteht.

10. Karosserieanbauteil nach einem der vorhergehenden Ansprüche, **dadurch gekennzeichnet, daß** das Karosserieanbauteil eine durch die Kunststoffolie (15) gebildete Außenseite (14) mit einer Class-A Oberfläche hat.

11. Verfahren zum Herstellen des Karosserieanbauteils (12) nach einem der vorhergehenden Ansprüche, insbesondere eines Dachmoduls, **gekennzeichnet durch** folgende Schritte:
a) auf die Kunststoffolie (15) wird innenseitig die Schutzschicht (20) zur Bildung eines Zwischenproduktes aufgebracht und
b) das Zwischenprodukt wird innenseitig mit dem Kunststoff zur Bildung der faserverstärkten Schicht (22) hinterschäumt.

12. Verfahren nach Anspruch 11, **dadurch gekennzeichnet, daß** die Schutzschicht (20) durch Koextrudieren oder Kaschieren oder Schäumen auf die Kunststoffolie (15) aufgebracht wird.

13. Verfahren nach Anspruch 11 oder 12, **dadurch gekennzeichnet, daß** die Schutzschicht (20) ein vorgefertigtes Bauteil ist, das zuerst innenseitig an die Kunststoffolie (15) angelegt und vom Kunststoff der faserverstärkten Schicht (22) durchdrungen wird.

14. Verfahren nach Anspruch 11 oder 12, **dadurch gekennzeichnet, daß** die Kunststoffolie (15) durch Tiefziehen bearbeitet wird.

15. Verfahren nach Anspruch 14, **dadurch gekennzeichnet, daß** der Tiefziehvorgang vor Schritt a) erfolgt.

16. Verfahren nach einem der Ansprüche 11 bis 15, **dadurch gekennzeichnet, daß** die Kunststoffolie (15) eine außenseitige Deckschicht (16) und eine innenseitige Trägerschicht (18) aufweist und aus einer mindestens zweischichtigen Koextrusionsfolie hergestellt ist, die durch Tiefziehen bearbeitet wird.

## Claims

1. A mount-on vehicle body part, in particular a roof module (D), the mount-on vehicle body part (12) having an outer surface (14) which is visible in the installed state, comprising
an outside thin, dyed plastic foil (15),
an inside fiber-reinforced layer (22) made of plastic, as well as
a protective layer (20) provided between the plastic foil (15) and the fiber-reinforced layer (22), the protective layer being made of plastic and configured such that it prevents a direct contact between the fibers (26) of the fiber-reinforced layer (22) and the plastic foil (15), and such that it prevents the fibers (26) from appearing on the outer surface (14) which occurs when the protective layer (20) is omitted.

2. The mount-on vehicle body part according to claim 1, **characterized in that** the plastic foil (15) has an inside carrier layer (18) and at least one outside covering layer (16).

3. The mount-on vehicle body part according to claim 2, **characterized in that** the covering layer (16) together with the carrier layer (18) is made up of a double-layered co-extruded foil.

4. The mount-on vehicle body part according to any of the claims 1 to 3, **characterized in that** the fiber-reinforced layer (22) is made of a foamed, glass fiber-reinforced plastic.

5. The mount-on vehicle body part according to any of the preceding claims, **characterized in that** the fiber-reinforced layer (22) comprises polyurethane foam.

6. The mount-on vehicle body part according to claim 5, **characterized in that** the polyurethane of the fiber-reinforced layer (22) penetrates the protective layer (20) and is bonded to the plastic foil (15) on the inside thereof.

7. The mount-on vehicle body part according to any of the preceding claims, **characterized in that** the fiber-reinforced layer (22) is provided with fibers (26) by the long fiber injection method.

8. The mount-on vehicle body part according to any of the preceding claims, **characterized in that** the fiber-reinforced layer (22) represents a foamed backing of the protective layer (20).

9. The mount-on vehicle body part according to any of the preceding claims, **characterized in that** the protective layer (20) consists of foam or soft plastic.

10. The mount-on vehicle body part according to any of the preceding claims, **characterized in that** the outer surface (14) of the mount-on vehicle body part is formed by the plastic foil (15) and has a class A surface.

11. A method of manufacturing the mount-on vehicle body part (12) according to any of the preceding claims, in particular a roof module, **characterized by** the following steps:
a) an intermediate product is formed in that the protective layer (20) is applied to the plastic foil (15) on the inside thereof,
b) the intermediate product is provided on its inside with a foamed plastic backing layer, in order to produce the fiber-reinforced layer (22).

12. The method according to claim 11, **characterized in that** the protective layer (20) is applied to the plastic foil (15) by co-extruding, laminating or foaming.

13. The method according to claim 11 or 12, **characterized in that** the protective layer (20) is a prefabricated component which in a first step is applied to the inside of the plastic foil (15) and in a second step is penetrated by the plastic material of the fiber-reinforced layer (22).

14. The method according to claim 11 or 12, **characterized in that** the plastic foil (15) undergoes a deep-drawing process.

15. The method according to claim 14, **characterized in that** the deep-drawing process is done prior to step a).

16. The method according to any of the claims 11 to 15, **characterized in that** the plastic foil (15) has an outside covering layer (16) and an inside carrier layer (18) and is made from an at least double-layered co-extruded foil treated by deep-drawing.

## Revendications

1. Composant à rapporter sur une carrosserie, en particulier module de toit (D), le composant à rapporter sur la carrosserie (12) ayant une surface extérieure (14) visible à l'état de montage, comportant
une feuille de matière plastique (15) extérieure, mince et colorée,
une couche (22) de matière plastique intérieure renforcée par des fibres, ainsi
qu'une couche de protection (20) entre la feuille de matière plastique (15) et la couche (22) renforcée par des fibres, qui est en matière plastique et réalisée de telle sorte qu'elle empêche un contact direct des fibres (26) de la couche (22) renforcée par des fibres avec la feuille de matière plastique (15), et qu'elle empêche une empreinte des fibres (26) sur la face extérieure (14), qui se produit sans la couche de protection.

2. Composant à rapporter sur une carrosserie selon la revendication 1, **caractérisé en ce que** la feuille de matière plastique (15) présente une couche support (18) intérieure et au moins une couche de recouvrement (16) extérieure.

3. Composant à rapporter sur une carrosserie selon la revendication 2, **caractérisé en ce que** la couche de recouvrement (16), conjointement avec la couche support (18), est constituée par une feuille de coextrusion à deux couches.

4. Composant à rapporter sur une carrosserie selon l'une des revendications 1 à 3, **caractérisé en ce que** la couche (22) renforcée par des fibres est en matière plastique moussée et renforcée par des fibres de verre.

5. Composant à rapporter sur une carrosserie selon l'une des revendications précédentes, **caractérisé en ce que** la couche (22) renforcée par des fibres est de la mousse de polyuréthane.

6. Composant à rapporter sur une carrosserie selon la revendication 5, **caractérisé en ce que** le polyuréthane de la couche (22) renforcée par des fibres traverse la couche de protection (20) et est reliée côté intérieur avec la feuille de matière plastique (15).

7. Composant à rapporter sur une carrosserie selon l'une des revendications précédentes, **caractérisé en ce que** la couche (22) renforcée par des fibres est pourvue de fibres (26) selon le procédé d'injection de fibres longues.

8. Composant à rapporter sur une carrosserie selon l'une des revendications précédentes, **caractérisé en ce que** la couche (22) renforcée par des fibres est appliquée par moussage sur la face postérieure de la couche de protection (20).

9. Composant à rapporter sur une carrosserie selon l'une des revendications précédentes, **caractérisé en ce que** la couche de protection (20) est constituée par de la mousse ou de la matière plastique souple.

10. Composant à rapporter sur une carrosserie selon l'une des revendications précédentes, **caractérisé en ce que** le composant à rapporter sur la carrosserie a une surface extérieure (14) formée par la feuille de matière plastique (15) avec une surface de classe A.

11. Procédé de fabrication du composant à rapporter sur une carrosserie (12) selon l'une des revendications précédentes, en particulier d'un module de toit, **caractérisé par** les étapes suivantes :
a) on applique la couche de protection (20) sur la face intérieure de la feuille de matière plastique (15) pour former un produit intermédiaire, et
b) le produit intermédiaire est moussé sur la face postérieure de la face intérieure avec la matière plastique pour former une couche (22) renforcée par des fibres.

12. Procédé selon la revendication 11, **caractérisé en ce que** la couche de protection est appliquée par coextrusion ou contrecollage ou moussage sur la feuille de matière plastique (15).

13. Procédé selon la revendication 11 ou 12, **caractérisé en ce que** la couche de protection (20) est un composant préfabriqué qui est mis en appui tout d'abord sur la face intérieure de la feuille de matière plastique (15) et qui est traversé par la matière plastique de la couche (22) renforcée par des fibres.

14. Procédé selon la revendication 11 ou 12, **caractérisé en ce que** la feuille de matière plastique (15) est usinée par emboutissage.

15. Procédé selon la revendication 14, **caractérisé en ce que** l'opération d'emboutissage a lieu avant l'étape a).

16. Procédé selon l'une des revendications 11 à 15, **caractérisé en ce que** la feuille de matière plastique (15) présente une couche de recouvrement extérieure (16) et une couche support intérieure (18) et est fabriquée à partir d'une feuille de coextrusion à au moins deux couches, qui est traitée par emboutissage.
